# FASCICULE DE BREVET EUROPEEN

(11) **EP 3 462 838 B1**
(45) Date de publication et mention de la délivrance du brevet: **18.03.2020**
(21) Numéro de dépôt: 17730884.8
(22) Date de dépôt: 31.05.2017
(51) Int. Cl.: A01G 9/12, A01G 17/04, A01G 9/02

(54) **PAROI COMPLEXE VÉGÉTALISÉE SUR TOITURE, DE PLANTES LIGNEUSES SUR LAME D'AIR, KIT POUR INSTALLATION**
KOMPLEXE GRÜNE WAND AUF EINEM DACH, AUS GEHÖLZPLFLANZEN ÜBER EINEM LUFTSPALT, INSTALLATIONSKIT
COMPLEX GREEN WALL ON A ROOF, OF WOODY PLANTS OVER AN AIR GAP, INSTALLATION KIT

(30) Priorité: 06.06.2016 FR 1655132
(43) Date de publication de la demande: 10.04.2019
(73) Titulaire: Université de La Réunion, 97408 St Denis/Réunion (FR)
(72) Inventeur: JEAN, Aurélien, 97430 Le Tampon/Reunion (FR); MIRANVILLE, Frédéric, 97400 Saint-Denis/Reunion (FR); LIBELLE, Teddy, 97438 Sainte-Marie/Reunion (FR); BOYER, Harry, 97425 Les Avirons/Reunion (FR); BIGOT, Dimitri, 97430 Le Tampon/Reunion (FR); GUICHARD, Stéphane, 97412 Bras-Panon/Reunion (FR); MALET-DAMOUR, Bruno, 97430 Le Tampon/Reunion (FR)
(74) Mandataire: Jacobacci Coralis Harle
(86) Numéro de dépôt international: PCT/FR2017/051369
(87) Numéro de publication internationale: WO 2017/212143

(56) Documents cités:
- CN-A- 102 235 049
- CN-U- 203 872 676
- JP-A- 2008 048 676
- JP-A- 2011 193 846
- JP-A- 2014 217 277

## Description

### DOMAINE TECHNIQUE AUQUEL SE RAPPORTE L'INVENTION

La présente invention concerne de manière générale le domaine des parois complexes végétalisées sur toiture et mettant en œuvre des ligneuses sur une lame d'air. Elle peut s'appliquer à une toiture métallique. Un kit pour l'installation de la paroi complexe végétalisée est aussi proposé.

### ARRIERE-PLAN TECHNOLOGIQUE

De nombreux bâtiments, en particulier d'habitation, dans certaines régions, notamment tropicales ou subtropicales, sont construits d'une manière relativement légère et comportent des toitures en tôles métalliques, notamment tôles ondulées. Ce type de construction et en particulier la toiture ne peut pas supporter de lourdes charges. La présence de tôles soumises au rayonnement solaire entraine, en l'absence d'une isolation thermique adéquate, des surchauffes à l'intérieur des bâtiments et, d'une manière générale, crée un certain inconfort.

L'isolation thermique a un coût significatif et nécessite une structure particulière en sous toiture ce qui fait qu'elle n'est pas toujours installée ou que son niveau d'isolation n'est pas choisi parmi les plus élevés. D'autres solutions ont été proposées pour réduire l'apport énergétique au bâtiment du fait du rayonnement solaire comme par exemple l'utilisation d'un revêtement réfléchissant sur la tôle de la toiture ou l'installation de surtoitures. D'autres solutions consistent à utiliser la chaleur latente d'évaporation de l'eau, notamment via un film d'eau ou d'une brumisation de la toiture. Suivant ces deux principes, il a été proposé d'utiliser des plantes afin de limiter les transferts énergétiques radiatifs dû au soleil la journée et à la voute céleste la nuit. En effet, les plantes interceptent les radiations allant de l'infrarouge lointain aux proches ultraviolets et créent un ombrage sur la toiture grâce à leurs ombres portées et aussi un contrôle de la température de surface de la sur-toiture via la transpiration des plantes. Ainsi, la plante permet une auto-régulation de la température en surtoiture grâce à sa transpiration.

Les documents US2015/0195995 et JP-2010263807 mentionnent l'utilisation de plantes sur des toitures mais les racines qui doivent être maintenues dans une substance nutritive sont également sur la toiture, ce qui crée une surcharge importante et complique l'entretien desdites plantes. On connait par les documents JP-2004000219 et JP-099140267 l'utilisation de plantes à feuilles caduques sur les murs d'une habitation. On connait par le document JP2011 193846A un système de culture hydroponique de plantes grimpantes sur nappe sur toiture et dont le milieu nutritif est disposé sur le faîte de la toiture et donc supporté par cette dernière. On connait d'autres modalités de culture par les documents JP2008 048676A, CN102 235 049A, CN203 872 676U et JP2014 217277A.

### OBJET DE L'INVENTION

Afin de remédier aux inconvénients ou incompatibilités des méthodes connues destinées à diminuer l'impact du rayonnement solaire sur les toitures, notamment métalliques de constructions légères, il est proposé une paroi complexe végétalisée avec des plantes de type ligneuses, sur lame d'air en surface de la toiture. Il s'agit donc d'une paroi complexe végétalisée destinée à une toiture d'une construction.

La paroi complexe végétalisée de la présente invention est définie par la revendication 1.

D'autres caractéristiques non limitatives et avantageuses de l'invention, prises individuellement ou selon toutes les combinaisons techniquement possibles, sont les suivantes :
- la hauteur réglable de la lame d'air est une hauteur selon une perpendiculaire à la surface de la toiture entre cette surface de la toiture et la nappe support,
- la toiture de la construction est recouverte de tôles métalliques,
- le milieu nutritif est disposé dans un réceptacle,
- le milieu nutritif disposé éloigné de la toiture n'est pas supporté directement ou indirectement par la toiture ou par une charpente de la toiture,
- la hauteur déterminée de la lame d'air est sensiblement uniforme,
- la hauteur déterminée de la lame d'air est différente d'un écarteur à un autre de la toiture,
- la hauteur déterminée de la lame d'air est différente d'une zone à une autre de la toiture,
- la différence de hauteur de la lame d'air d'un écarteur à un autre ou d'une zone à une autre est réglable,
- la hauteur de la lame d'air est réglable par des moyens de réglage de la hauteur de fixation de la nappe support sur les écarteurs et/ou par des moyens de réglage de la hauteur des écarteurs,
- les moyens de retenue de la partie aérienne foliaire sur la nappe support sont naturels, la plante ligneuse comportant des éléments végétaux d'accrochage de type vrille à la nappe support et/ou la plante ligneuse étant installée entrelacée dans la nappe support,
- les moyens de retenue de la partie aérienne foliaire sur la nappe support sont des liens mis en place par un installateur de la paroi complexe végétalisée,
- la toiture est en pente,
- la paroi complexe végétalisée est destinée à une toiture bordée en périphérie par au moins un élément montant d'une construction réalisée sur un sol, et la partie racinaire dans le milieu nutritif est au sol ou dans un réceptacle disposé le long de l'élément montant, la partie aérienne foliaire comportant une portion libre montante entre la partie racinaire et la portion maintenue sur la nappe support,
- l'élément montant est un mur ou un support de toiture en périphérie de la toiture,
- le milieu nutritif disposé éloigné de la toiture est supporté par l'élément montant,
- le milieu nutritif disposé éloigné de la toiture est fixé sur l'élément montant,
- le milieu nutritif disposé éloigné de la toiture repose sur le sol,
- le milieu nutritif disposé éloigné de la toiture est dans le sol,
- la portion libre montante de la partie foliaire est configurée selon au moins une des modalités suivantes: regroupement en faisceaux, passage dans des tubes coupe lumière destinés à empêcher la pousse de feuilles,
- le milieu nutritif au sol est en outre étendu en hauteur, la partie racinaire étant au moins disposée dans une colonne montante creuse contenant le milieu nutritif et s'étendant jusqu'au sol,
- la nappe support comporte des tiges ou profilés rigides organisés entre eux parallèlement ou entrecroisés en treillis et définissant des espaces libres entre eux,
- les tiges ou profilés rigides sont linéaires,
- les tiges ou profilés rigides sont contournés,
- les tiges ou profilés rigides sont métalliques,
- la nappe support comporte des éléments filaires organisés entre eux parallèlement ou entrecroisés en treillis et définissant des espaces libres entre eux,
- la nappe support maintient tendus les éléments filaires,
- les espaces libres ont une surface minimale d'au moins 100 cm²,
- les espaces libres ont une surface comprise entre 100 cm² et 2500 cm²,
- la lame d'air entre la surface de la toiture et la nappe support a une hauteur permettant le passage d'un outil sur manche allongé, ledit outil étant notamment un outil de coupe de végétaux destiné à l'élimination des éléments végétaux ayant pu pousser dans la lame d'air,
- la lame d'air entre la surface de la toiture et la nappe support a une hauteur réglable comprise entre 5 cm et 1,5 m, de préférence entre 10 cm et 50 cm,
- les écarteurs ont une hauteur comprise entre 10 cm et 1,6 m,
- les écarteurs ont une hauteur comprise entre 15 cm et 60 cm,
- les écarteurs ont une hauteur d'environ 40 cm,
- la plante ligneuse est « Tristellateia Australasiae »,
- la plante ligneuse est « Cassia fistula »,
- les plantes ligneuses mises en œuvre sont choisies en fonction de leur capacité à pousser et survivre dans le contexte de pose, notamment en fonction du climat, de l'irrigation naturelle et/ou artificielle, de l'intensité du rayonnement solaire.

L'invention propose également un kit pour la réalisation de la paroi complexe végétalisée de l'invention selon la revendication 9.

### DESCRIPTION DETAILLEE D'UN EXEMPLE DE REALISATION

La description qui va suivre en relation avec les dessins annexés, donnés à titre d'exemple non limitatif, fera bien comprendre en quoi consiste l'invention et comment elle peut être réalisée.

Sur les dessins annexés :
- la figure 1 représente schématiquement et vu en coupe, un bâtiment à toiture en tôle métallique sur laquelle une paroi complexe végétalisée selon l'invention a été installée, et
- la figure 2 représente schématiquement et vu en coupe la mise en œuvre d'une colonne montante creuse contenant un milieu nutritif le long de la façade d'un bâtiment.

### Dispositif

Dans le cadre de l'invention, il est prévu l'utilisation de plantes ligneuses qui ont une grande extension, ce qui permet de séparer physiquement les parties aériennes qui sont à l'air libre des parties racinaires qui sont dans un milieu nutritif, en général un substrat matériel plein pour des plantes qui ne sont pas cultivées hors sol. Les parties racinaires peuvent ainsi être placées en des endroits dont l'accès est aisé pour faciliter l'entretien de la plante contrairement aux parois végétalisées mettant en œuvre des herbacées ou équivalents où le système racinaire jouxte la partie aérienne et se trouve directement sur la paroi, en l'espèce une toiture.

En outre, le fait d'éloigner de la toiture la partie racinaire et son milieu nutritif qui est généralement humide, voir saturé en eau, évite la présence d'une humidité forte et constante au niveau de la toiture et des risques que cela peut entraîner, par exemple d'oxydation d'une couverture métallique, de dépôts terreux sur la toiture et de la pousse de lichen ou de mousses. Le terme éloigné est compris comme signifiant que la partie racinaire et son milieu nutritif ne se trouvent pas à l'aplomb/au-dessus de la toiture ou même sur la toiture mais plutôt à distance au moins latérale de la toiture, c'est-à-dire encore en hauteur, voir au sol et toujours latéralement à la toiture.

La végétation utilisée est dite ligneuse car elle a la capacité de s'étendre loin du lieu de son enracinement, telles que les plantes grimpantes, rampantes et autres lianes.

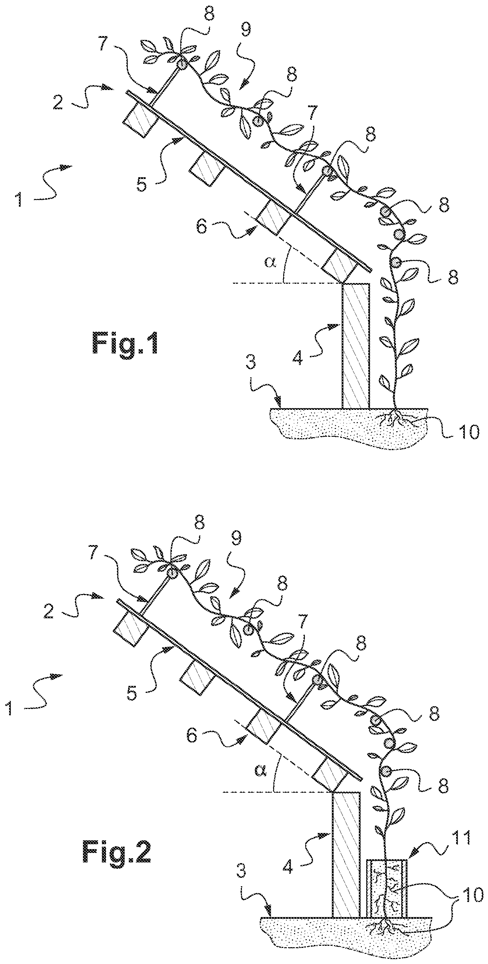

Sur la figure 1, on a représenté en coupe schématique une partie d'un bâtiment 1 avec un mur de façade 4 et une partie de sa toiture 2 en pente constituée d'une structure porteuse 6 sur laquelle sont fixées des tôles 5 métalliques. On a installé et fixé sur la toiture des écarteurs 7 aux extrémités libres desquels on a fixé des éléments filaires 8 afin de réaliser une nappe support sensiblement tendue à distance des tôles. Ces éléments filaires 8 sont des fils ou câbles qui sont tendus entre les écarteurs 7 ou même un treillis ou grillage préfabriqué tendu entre les écarteurs 7. La nappe support peut être un réseau de fils ou câbles parallèles entre eux ou un entrecroisement de ceux-ci.

Dans une variante de réalisation, la nappe support comporte seulement ou combiné avec des éléments filaires, des tiges ou profilés, de préférence métalliques, et qui sont sensiblement rigides. Tout comme les éléments filaires, les tiges ou profilés peuvent être entrecroisés ou non pour former une grille ou un treillis selon les cas.

Une lame d'air de hauteur déterminée sur la surface de la toiture 2 est ainsi créée entre les tôles 5 et la nappe support. Ces éléments filaires tout comme les tiges ou profilés sont de préférence imputrescibles et non oxydables, par exemple comportant du fil de fer galvanisé possiblement plastifié. Il en est de même pour les écarteurs.

Dans le mode de réalisation préféré, l'épaisseur/hauteur de la lame d'air est réglable grâce à des moyens de réglage de la hauteur de fixation de la nappe support sur les écarteurs et/ou grâce à des moyens de réglage de la hauteur des écarteurs. A titre d'exemple de moyens de réglage de la hauteur de fixation de la nappe support sur les écarteurs, l'écarteur est un rail de coulissement sur/dans lequel un moyen d'attache coulissant de la nappe support peut coulisser. A titre d'exemple de moyens de réglage de la hauteur des écarteurs, l'écarteur est une tige télescopique ou un vérin. Ainsi, on peut régler la hauteur de la lame d'air en fonction de la position en hauteur de la nappe support.

A noter, qu'il est possible dans certaines modalités d'avoir un réglage de hauteur différent entre les divers écarteurs afin de pouvoir aussi régler l'orientation générale de la nappe support par rapport à l'orientation générale de la toiture. Ainsi, le plan général global ou localisé de la nappe support n'est pas forcement parallèle au plan général de la toiture et donc la hauteur de la lame d'air peut être différente selon les endroits de la toiture et, même, être réglable selon les endroits de cette toiture.

Selon l'invention, la nappe support peut se déplacer en translation pour découvrir ou recouvrir selon le cas certaines parties de la toiture. Par exemple, un vasistas peut être présent sur la toiture et il peut être masqué ou démasqué du soleil en fonction de la position en translation de la nappe support. Dans ces variantes, il est préférable que la nappe support soit un élément monobloc, se déplaçant d'un bloc en totalité ou, alors, en partie pour la partie mobile en translation.

On comprend qu'il est préférable que le milieu nutritif suive la nappe support dans ses mouvements de translation et/ou en hauteur afin d'éviter des contraintes en traction et/ou torsion aux plantes. Dans une variante, le milieu nutritif est rendu mobile en synchronisme avec la mobilité de la nappe support. De préférence, dans ce dernier cas, le milieu nutritif est dans un réceptacle avec son propre moyen de mobilité en synchronisme, ce propre moyen de mobilité étant indépendant de la toiture et non matériellement fixé à la nappe support pour éviter d'appliquer à cette dernière un bras de levier important et/ou de reporter le poids du milieu nutritif en toiture.

La lame d'air permet une ventilation contrôlée ou non sous la végétation et sa hauteur est adaptée selon les circonstances de pose, notamment lieu, climat, etc. La hauteur de la lame d'air peut ne pas être uniforme spatialement, la hauteur étant différente selon l'endroit considéré de la toiture, et/ou temporellement, avec une adaptation de la hauteur de la lame d'air automatique ou manuelle en fonction des conditions climatiques par exemple.

Les moyens de réglage de la nappe support en hauteur et/ou translation peuvent être manuels ou même automatisés grâce à des organes effecteurs, par exemple vérins, enrouleurs/dérouleurs agissant sur les moyens de positionnement de la nappe support pour réglage en hauteur et/ou translation.

Sur cette nappe support, a été installée et/ou s'est développée une plante ligneuse 9 dont la partie aérienne foliaire a été fixée et/ou s'est fixée, par ex. par ses vrilles si elle en possède, sur la nappe support. La partie racinaire 10 de la plante ligneuse est dans le sol 3 qui forme un milieu nutritif propice au développement de la plante. Une portion de la partie aérienne foliaire de la plante 9 s'étend sensiblement verticalement en façade du bâtiment pour rejoindre la partie aérienne foliaire fixée sur la nappe support qui se trouve sur la toiture 2.

Dans la variante de la figure 2, une colonne montante 11 creuse remplie de milieu nutritif a été installée sur le sol 3 le long de la façade 4 du bâtiment 1 et la partie racinaire 10 de la plante ligneuse s'y est développé jusqu'à atteindre le sol et s'y propager également. Une même colonne montante 11 peut être utilisée pour plusieurs pieds/plantes ligneuses et les portions basse en façade des parties aériennes foliaires de ces plantes sont séparées/étalées avant d'atteindre la toiture afin que les partie aériennes foliaires desdites plantes de la colonne montante commune soient réparties en toiture. Une colonne montante peut avoir une hauteur comprise entre 50 cm et 100 cm ou plus jusqu'à atteindre la partie basse de la toiture.

Typiquement, les plantes sont d'abord cultivées en pépinière avant d'être installées sur le bâtiment pour former la paroi complexe végétalisée.

Dans une autre variante, un manchon, possiblement opaque, sans matière nutritive est mis en œuvre dans la portion basse de la partie aérienne foliaire, le long de la façade, pour empêcher la pousse des feuilles du fait de l'absence de lumière (manchon opaque) et/ou regrouper ces portions, par exemple pour passer sur les côtés d'une ouverture (porte ou fenêtre).

De préférence, la plante ligneuse/grimpante est Tristellateia Australasiae (Tristellateia australasiae A. Rich.) de la famille des Malpighiaceae (Malpighiacées). Elle est parfois appelée « étoile d'Australie ». Elle a un développement rapide et vigoureux et cette plante grimpante peut atteindre trois à six mètres de haut. De plus, elle se distingue par sa constance : la canopée est toujours verte (malgré la sécheresse) et parsemée de tons jaunes (floraison quasi-continue). Enfin, elle possède l'avantage de ne pas attirer les parasites.

On peut également choisir la plante suivante : « Cassia fistula » encore appelée « douche d'or ».

## Revendications

1. Paroi complexe végétalisée destinée à une toiture (2) d'une construction (1) comportant des plantes ligneuses (9), une nappe support (8) et des écarteurs (7), les plantes ligneuses (9) ayant une partie aérienne foliaire et une partie racinaire (10), les écarteurs (7) étant fixés sur la toiture (2) et maintenant à distance la nappe support (8) de la surface de la toiture afin de créer une lame d'air de hauteur déterminée entre la surface de la toiture (2) et la nappe support (8), la portion de la partie aérienne foliaire des plantes ligneuses (9) s'étendant au-dessus de la toiture (2) étant maintenue par des moyens de retenue sur la nappe support (8), la partie racinaire (10) étant dans un milieu nutritif disposé éloigné de la toiture (2) et non en contact avec la toiture, le milieu nutritif disposé éloigné de la toiture (2) n'étant pas à l'aplomb de la toiture (2), la hauteur de la lame d'air étant réglable par des moyens de réglage,
la paroi complexe végétalisée comportant des moyens de translation, la nappe support pouvant se déplacer en translation pour découvrir ou recouvrir certaines parties de la toiture.

2. Paroi complexe végétalisée selon la revendication 1, **caractérisée en ce que** le milieu nutritif est disposé dans un réceptacle comportant un moyen de mobilité en synchronisme de la translation de la nappe support.

3. Paroi complexe végétalisée selon la revendication 1 ou la revendication 2, **caractérisée en ce que** le milieu nutritif disposé éloigné de la toiture (2) n'est pas supporté directement ou indirectement par la toiture (2) ou par une charpente de la toiture.

4. Paroi complexe végétalisée selon l'une quelconque des revendications précédentes, **caractérisée en ce que** la hauteur de la lame d'air est réglable par des moyens de réglage de la hauteur de fixation de la nappe support sur les écarteurs et/ou par des moyens de réglage de la hauteur des écarteurs.

5. Paroi complexe végétalisée selon l'une quelconque des revendications précédentes, **caractérisée en ce que** la nappe support (8) comporte des éléments filaires et/ou des tiges ou profilés rigides organisés entre eux parallèlement ou entrecroisés en treillis et définissant des espaces libres entre eux.

6. Paroi complexe végétalisée selon l'une quelconque des revendications précédentes, **caractérisée en ce qu'**elle est destinée à une toiture(2) bordée en périphérie par au moins un élément montant (4) d'une construction (1) réalisée sur un sol (3), et **en ce que** la partie racinaire (10) dans le milieu nutritif est au sol (3) ou dans un réceptacle (11) disposé le long de l'élément montant (4), la partie aérienne foliaire comportant une portion libre montante entre la partie racinaire et la portion maintenue sur la nappe support (8).

7. Paroi complexe végétalisée selon la revendication 6, **caractérisée en ce que** la portion libre montante de la partie foliaire est configurée selon au moins une des modalités suivantes : regroupement en faisceaux, passage dans des tubes coupe lumière destinés à empêcher la pousse de feuilles.

8. Paroi complexe végétalisée selon l'une quelconque des revendications précédentes, **caractérisée en ce que** la plante ligneuse (9) est « Tristellateia Australasiae » ou « Cassia fistula ».

9. Kit pour la réalisation de la paroi complexe végétalisée de l'une quelconque des revendications précédentes, **caractérisé en ce qu'**il comporte des écarteurs (7), des éléments filaires et/ou des tiges ou profilés rigides, des moyens de translation destinés à réaliser la nappe support (8) et des plantes ligneuses (9).

## Patentansprüche

1. Komplexe begrünte Wandung, die für ein Dach (2) einer Konstruktion (1) bestimmt ist, mit Gehölzpflanzen (9), einer Trägerbahn (8) und Abstandshaltern (7), wobei die Gehölzpflanzen (9) einen Blätter aufweisenden oberirdischen Teil und einen Wurzelteil (10) aufweisen, wobei die Abstandshalter (7) auf dem Dach (2) befestigt sind und die Trägerbahn (8) in einem Abstand zur Oberfläche des Dachs halten, um zwischen der Oberfläche des Dachs (2) und der Trägerbahn (8) eine Luftschicht mit bestimmter Dicke zu schaffen, wobei der sich oberhalb des Dachs (2) erstreckende Abschnitt des Blätter aufweisenden oberirdischen Teils der Gehölzpflanzen (9) durch Rückhaltemittel auf der Trägerbahn (8) festgehalten wird, wobei sich der Wurzelteil (10) in einem vom Dach (2) entfernt angeordneten und nicht mit dem Dach in Kontakt stehenden Nährmedium befindet, wobei sich das vom Dach (2) entfernt angeordnete Nährmedium nicht senkrecht unter dem Dach (2) befindet, wobei die Höhe der Luftschicht durch Einstellmittel einstellbar ist, wobei die komplexe begrünte Wandung Verlagerungsmittel aufweist, wobei die Trägerbahn sich translatorisch verlagern kann, um bestimmte Teile des Dachs freizulegen oder zu bedecken.

2. Komplexe begrünte Wandung gemäß Anspruch 1, **dadurch gekennzeichnet, daß** das Nährmedium in einem Behälter angeordnet ist, der ein Mittel für eine mit der Translation der Trägerbahn synchrone Beweglichkeit aufweist.

3. Komplexe begrünte Wandung gemäß Anspruch 1 oder nach Anspruch 2, **dadurch gekennzeichnet, daß** das vom Dach (2) entfernt angeordnete Nährmedium weder direkt noch indirekt vom Dach (2) oder von einem Dachstuhl des Dachs getragen wird.

4. Komplexe begrünte Wandung gemäß einem der vorangehenden Ansprüche, **dadurch gekennzeichnet, daß** die Höhe der Luftschicht durch Mittel zum Einstellen der Befestigungshöhe der Trägerbahn auf den Abstandshaltern und/oder durch Mittel zum Einstellen der Höhe der Abstandshalter einstellbar ist.

5. Komplexe begrünte Wandung gemäß einem der vorangehenden Ansprüche, **dadurch gekennzeichnet, daß** die Trägerbahn (8) drahtartige Elemente und/oder steife Stäbe oder Profile aufweist, die parallel zueinander oder zu einem Gitter gekreuzt angeordnet sind und zwischen ihnen freie Räume definieren.

6. Komplexe begrünte Wandung gemäß einem der vorangehenden Ansprüche, **dadurch gekennzeichnet, daß** sie für ein Dach (2) bestimmt ist, das am Umfang mit wenigstens einem aufsteigenden Element (4) einer auf einem Boden (3) errichteten Konstruktion (1) umrandet ist, und daß sich der Wurzelteil (10) im Nährmedium am Boden (3) oder in einem entlang des aufsteigenden Elements (4) angeordneten Behälter (11) befindet, wobei der Blätter aufweisende oberirdische Teil zwischen dem Wurzelteil und dem auf der Trägerbahn festgehaltenen Abschnitt (8) einen freien aufsteigenden Abschnitt aufweist.

7. Komplexe begrünte Wandung gemäß Anspruch 6, **dadurch gekennzeichnet, daß** der freie aufsteigende Abschnitt des Blätter aufweisenden oberirdischen Teils gemäß wenigstens einer der folgenden Vorgehensweisen ausgeführt ist: Zusammenfassen zu Bündeln, Hindurchführen durch Lichtschutzrohre, die dazu bestimmt sind, das Wachstum von Blättern zu verhindern.

8. Komplexe begrünte Wandung gemäß einem der vorangehenden Ansprüche, **dadurch gekennzeichnet, daß** die Gehölzpflanze (9) "Tristellateia Australasiae" oder "Cassia fistula" ist.

9. Kit zur Herstellung der komplexen begrünten Wandung gemäß einem der vorangehenden Ansprüche, **dadurch gekennzeichnet, daß** er Abstandshalter (7), drahtartige Elemente und/oder steife Stäbe oder Profile, Translationsmittel, die dazu bestimmt sind, die Trägerbahn (8) zu bilden, und Gehölzpflanzen (9) aufweist.

## Claims

1. A complex green wall for a roof (2) of a building (1), including woody plants (9), a support layer (8) and spacers (7), the woody plants (9) having a foliar aerial part and a root part (10), the spacers (7) being fastened to the roof (2) and maintaining the support layer (8) remote from the roof surface in order to create an air gap of determined height between the surface of the roof (2) and the support layer (8), the portion of the foliar aerial part of the woody plants (9) that extends above the roof (2) being maintained by holding means on the support layer (8), the root part (10) being in a nutrient medium arranged remote from the roof (2) and not in contact with the roof, the nutrient medium arranged remote from the roof (2) being out of plumb of the roof (2), the height of the air gap being adjustable by adjustment means,
the complex green wall including translation means, the support layer being able to move in translation to uncover or cover some parts of the roof.

2. The complex green roof according to claim 1, **characterized in that** the nutrient medium is arranged in a recipient including mobility means moving synchronously with the translation of the support layer.

3. The complex green roof according to claim 1 or claim 2, **characterized in that** the nutrient medium arranged remote from the roof (2) is not supported directly or indirectly by the roof (2) of by a frame of the roof.

4. The complex green roof according to any one of the preceding claims, **characterized in that** the height of the air gap is adjustable using means for adjusting the height of fixation of the support layer on the spacers and/or using means for adjusting the height of the spacers.

5. The complex green roof according to any one of the preceding claims, **characterized in that** the support layer (8) includes wire elements and/or rigid rods or profiles arranged parallel to each other or arranged into a mesh and defining free spaces between each other.

6. The complex green roof according to any one of the preceding claims, **characterized in that** it is intended for a roof (2) lined at the periphery thereof by at least one rising element (4) of a building (1) constructed on a ground (3), and **in that** the root part (10) in the nutrient medium is in the ground (3) or in a recipient (11) arranged along the rising element (4), the foliar aerial part including a free rising portion between the root part and the part maintained on the support layer (8).

7. The complex green roof according to claim 6, **characterized in that** the free rising portion of the foliar part is configured according to at least one of the following modes: gathering into bundles, passage into light-shade tubes intended to prevent leaf growth.

8. The complex green roof according to any one of the preceding claims, **characterized in that** the woody plant (9) is "Tristellateia Australasiae" or "Cassia fistula".

9. A kit for making the complex green wall according to any one of the preceding claims, **characterized in that** it includes spacers (7), wire elements and/or rigid rods or profiles, translation means, intended to make the support layer (8) and woody plants (9).
